# EUROPÄISCHE PATENTSCHRIFT

(11) **EP 1 490 419 B1**
(45) Veröffentlichungstag und Bekanntmachung des Hinweises auf die Patenterteilung: **13.05.2009**
(21) Anmeldenummer: 03724849.9
(22) Anmeldetag: 25.03.2003
(51) Int. Cl.: C08G 18/32, C09D 175/04, C08G 18/80

(54) **FUNKTIONALISIERTES POLYURETHAN**
FUNCTIONALIZED POLYURETHANE
POLYURETHANE FONCTIONNALISE

(30) Priorität: 27.03.2002 DE 10214028
(43) Veröffentlichungstag der Anmeldung: 29.12.2004
(73) Patentinhaber: PPG Industries Ohio, Inc., Cleveland, OH 44111 (US)
(72) Erfinder: HILLE, Dieter, 51467 Bergisch Gladbach (DE); JAHNY, Karsten, 71636 Ludwigsburg (DE); LAMERS, Paul, 71711 Steinheim (DE)
(74) Vertreter: Fleischer, Holm Herbert
(86) Internationale Anmeldenummer: PCT/DE2003/000981
(87) Internationale Veröffentlichungsnummer: WO 2003/080694

(56) Entgegenhaltungen:
- EP-A- 0 355 682
- EP-A- 0 414 099
- WO-A-02/24778
- DE-A- 19 849 208
- US-B1- 6 248 225

## Beschreibung

Die vorliegende Erfindung betrifft ein neues, wasserverdünnbares Polyurethan, sowie dessen Verwendung in der Automobilserienlackierung.

Es ist bekannt, Polyurethane als Bindemittel für hochwertige Beschichtungszusammensetzungen zu verwenden. Die resultierenden Beschichtungen weisen ausgezeichnete mechanische Eigenschaften auf, insbesondere im Hinblick auf die mechanische Beanspruchbarkeit des ausgehärteten Lackfilms.

Demzufolge werden Polyurethane häufig bei der Herstellung herkömmlicher Autolackschichten verwendet.

Eine solche Autolackschicht besteht im allgemeinen aus insgesamt vier voneinander unterschiedlichen Schichten (Vierschichtaufbau). Diese vier Schichten werden nacheinander in getrennten Lackieranlagen aufgetragen.

Die erste, direkt auf dem Autoblech befindliche Schicht ist eine elektrophoretisch aufgetragene Schicht (Electrocoatschicht, KTL-Schicht), die durch Elektrotauchlackierung - hauptsächlich kathodische Tauchlackierung (KTL) - zwecks Korrosionsschutz aufgebracht und anschließend eingebrannt wird.

Die zweite, auf der Elektrocoatschicht befindliche und etwa 30 bis 40 µm dicke Schicht ist eine sogenannte Füllerschicht, die einerseits Schutz gegen mechanische Angriffe (Steinschlagschutzfunktion) bietet, andererseits einen ausreichenden Decklackstand gewährleistet, d.h. die rauhe Oberfläche der Rohkarosserie für die nachfolgende Decklackierung glättet und kleinere Unebenheiten ausfüllt. Die zur Herstellung dieser Füllerschicht verwendeten Lacke enthalten neben Bindemitteln auch Pigmente. Dabei hat die Benetzbarkeit der verwendeten Pigmente einen Einfluss auf den Decklackstand der gesamten Mehrschichtlackierung und auch auf den Glanz der Füllerschicht, wie er von einigen Automobilherstellern gefordert wird. Die Füllerschicht wird größtenteils durch Applikation mit elektrostatischen Hochrotationsglocken und anschließendem Einbrennvorgang bei Temperaturen über 130 °C erzeugt.

Die dritte, auf der Füllerschicht befindliche Schicht ist die Basislackschicht, die durch entsprechende Pigmente der Karosserie die gewünschte Farbe gibt. Der Basislack wird im herkömmlichen Spritzverfahren aufgetragen. Die Schichtdicke dieser herkömmlichen Basislackschicht liegt je nach Farbton zwischen etwa 12 bis 25 µm. Meistens wird diese Schicht, besonders bei Metallic-Effektlacken, in zwei Verfahrensschritten aufgebracht. In einem ersten Schritt erfolgt die Auftragung mittels elektrostatischer Hochrotationsglocken, gefolgt von einem zweiten Auftrag mittels pneumatischer Zerstäubung. Diese Schicht wird (bei Verwendung von wässrigem Basislack) mit Infrarotstrahlern und/oder durch Warmluftkonvektion zwischengetrocknet.

Die vierte und oberste, auf der Basislackschicht befindliche Schicht ist die Klarlackschicht, die meistens in einem Auftrag durch elektrostatische Hochrotationsglocken aufgetragen wird. Sie verleiht der Karosserie den gewünschten Glanz und schützt den Basislack vor Umwelteinflüssen (UV-Strahlung, Salzwasser, etc.).

Anschließend werden die Basislackschicht und die Klarlackschicht gemeinsam eingebrannt.

Die zur Herstellung einer Mehrschichtlackierung für die Automobilindustrie verwendeten Füller basieren immer noch zu einem erheblichen Anteil auf Lösemittelbasis und erreichen eine Festkörperkonzentration bis zu 60 %. Diese hohe Festkörperkonzentration gewährleistet eine effiziente Applikation und damit einen guten Decklackstand der fertigen Mehrschichtlackierung. Beispiele für solche konventionelle Füller sind aus der DE 33 37 394 A1 bekannt.

Die Einbrenntemperaturen liegen in der Regel zwischen 155 und 165 °C. Von einigen Automobilherstellern wird darüber hinaus eine sogenannte "Überbrennstabilität" bis zu 190 °C gefordert. Das bedeutet, dass die mechanischen Eigenschaften wie Haftung und Steinschlagbeständigkeit bei diesen hohen Einbrennbedingungen nicht wesentlich verschlechtert werden dürfen. Um diese Forderung zu erfüllen bestehen die Bindemittelzusammensetzungen entsprechender Füllersysteme häufig aus gesättigten Polyestern, kombiniert mit hoch alkylierten Melaminharzen als Vernetzer. Es sind auch Kombinationen mit Polyurethanen bekannt, insbesondere mit blockierten Polyisocyanaten. Das hierfür am häufigsten verwendete Blockierungsmittel ist Methylethylketoxim. Der Vorteil bei der Verwendung von Methylethylketoxim gegenüber anderen Blockierungsmitteln besteht in seiner günstigen Deblockierungstemperatur, seiner Flüchtigkeit und seiner guten Verfügbarkeit. Nachteilig ist seine Vergilbungsneigung, was die Verwendbarkeit für helle Einbrennlacke stark einschränkt.

Die Vernetzung mit blockierten Polyisocyanaten verbessert zwar die Steinschlagbeständigkeit und die Überbrennstabilität, jedoch ist die Mitverwendung von Melaminharzen als Vernetzer unerlässlich im Hinblick auf andere wichtige Eigenschaften der Füllerschicht wie gute Schleifbarkeit, Beständigkeit gegenüber chemischen Angriffen, z.B. gegenüber Bremsflüssigkeit. Darüber hinaus werden auch der Verlauf und Decklackstand durch Kombination dieser beiden Vernetzer positiv beeinflusst.

Solche Hybridsysteme aus blockierten Polyisocyanaten und Melaminharzen sind jedoch problematisch im Hinblick auf die richtige Einstellung ihrer Reaktivität: Während bei den Polyurethanen die Deblockierungsreaktion und die nachfolgende Urethanbildungsreaktion mit basischen Katalysatoren unterstützt wird, lässt sich die Vernetzungsreaktion von Melaminharzen nur mit sauren Katalysatoren beschleunigen. Gegenseitige negative Einflüsse sind unvermeidlich.

Vor dem Hintergrund der bei konventionellen Füllern eingesetzten Lösemittel und der damit verbundenen Umweltproblematiken sind verstärkt Entwicklungen auf dem Gebiet wasserverdünnbarer Füller auf Basis von Polyurethanen zu beobachten.

Um die Wasserdispergierbarkeit von Polyurethanen zur erreichen, werden Carboxylgruppen in das Molekül eingebaut, die - häufig am Ende des Syntheseverfahrens - durch Neutralisation mit (vorzugsweise flüchtigen) Aminen in Carboxylatanionen umgewandelt werden. Sehr häufig erfolgt dieser Einbau von Carboxylgruppen durch Umsetzung mit Dimethylolpropionsäure.

Beispiele für solche wasserverdünnbaren Füller, die entsprechende Polyurethane enthalten, sind aus der EP 0 726 919 A1, EP 0 594 685 B1, EP 1 110 983 A2 und EP 1 110 987 A1 bekannt.

Des weiteren sind in der DE 199 30 555 C1 Polyurethane mit blockierten Isocyanatgruppen offenbart, die unter Verwendung von Alkanolaminen als Kettenverlängerungsmittel erhältlich sind. Bei dieser Kettenverlängerung reagieren die Hydroxylgruppen des Alkanolamins mit den NCO-Gruppen des Polyisocyanats unter Bildung einer Urethanbindung.

Die Wasserdispergierbarkeit der hergestellten Polyurethane wird auch hier durch Einbau von Carboxylgruppen infolge einer Umsetzung mit Dimethylolpropionsäure und anschließender Neutralisierung erreicht.

Es hat sich aber gezeigt, dass im industriellen Maßstab mit diesen wasserverdünnbaren Füllerzusammensetzungen auf Polyurethanbasis nur eine Festkörperkonzentration bis etwa 50 % erzielt werden kann. Im Vergleich zu konventionellen Füllern bewirkt dieser Unterschied eine geringe Applikationssicherheit und deutlich sichtbare Verschlechterungen der resultierenden Mehrschichtlackierung, insbesondere in bezug auf den Decklackstand.

Vor dem Hintergrund weiterer Energieeinsparungen und einer Verkürzung der Prozessschritte besteht seitens der Automobilindustrie darüber hinaus noch die Forderung nach einer Senkung der Füllereinbrenntemperatur von derzeit etwa 160 °C. Allerdings müssen solche Füller immer noch eine Überbrennstabilität bis zu 190 °C aufweisen.

Eine Senkung der Einbrenntemperatur durch Erhöhung der Reaktivität entsprechender Füllersysteme, beispielsweise durch Verwendung höher reaktiver Melaminharze, führt zu einer Versprödung bei Überbrennbedingungen, was einen Totalverlust des Steinschlagschutzes zur Folge hat.

Eine Reduzierung des Melaminharzgehalts hätte den Nachteil, dass die Beständigkeit gegen chemische Angriffe (z.B. durch Bremsflüssigkeit) beeinträchtigt wird.

Eine ausreichende Steinschlagschutzfunktion einer Mehrschichtlackierung auf dem Gebiet der Automobilserienlackierung ist dann gegeben, wenn sowohl die Bedingungen des "Monoschlagtests" als auch die des "Multischlagtests" erfüllt werden.

Beim sogenannten "Monoschlagtest" wird der Bruch im Aufbau der Mehrschichtlackierung unter Einwirkung einer genau definierten mechanischen Belastung lokalisiert. Beim sogenannten "Multischlagtest" wird die mechanische Belastbarkeit einer größeren Fläche der fertigen Beschichtung bei unterschiedlichen mechanischen Belastungen simuliert. Weitere Einzelheiten beider Tests finden sich bei den Beispielen.

Aufgabe der vorliegenden Erfindung ist die Bereitstellung eines Polyurethans, das für die Herstellung wasserverdünnbarer Füllerzusammensetzungen mit einem Festkörpergehalt von mehr als 50 Gew.-%, insbesondere von mehr als 55 Gew.-%, bei der Mehrschichtlackierung von Automobilkarosserien verwendet werden kann, wobei diese wasserverdünnbaren Füllerzusammensetzungen bereits bei einer Einbrenntemperatur von 140 °C zu resultierenden Füllerschichten führen, die sowohl die von der Automobilindustrie geforderte Steinschlagbeständigkeit als auch Überbrennstabilität aufweisen.

Darüber hinaus soll die resultierende Mehrschichtlackierung keine verschlechterten Eigenschaften hinsichtlich ihres Gesamteigenschaftsniveaus aufweisen, verglichen mit solchen des Standes der Technik, insbesondere im Hinblick auf die Applikationssicherheit und Vergilbungsbeständigkeit der Füllerschicht sowie den Decklackstand des Gesamtaufbaus.

Diese Aufgabe wird erfindungsgemäß gelöst durch ein wasserverdünnbares Polyurethan mit mindestens zwei freien OH-Gruppen, erhältlich aus einer ersten Umsetzung eines primären und/oder sekundären Alkanolamins mit einer NCO-Verbindung zu einem Zwischenprodukt, gefolgt von einer Addition eines cyclischen Carbonsäureanhydrids an das Zwischenprodukt; wobei
- die NCO-Verbindung mindestens eine freie NCO-Gruppe und keine blockierte NCO-Gruppe aufweist;
- bei der ersten Umsetzung zum Zwischenprodukt sämtliches Alkanolamin derart umgesetzt wird, dass das Stickstoffatom des Alkanolamins mit einer der freien NCO-Gruppen des Präpolymers unter Bildung einer Harnstoffbindung reagiert; und
- das cyclische Carbonsäureanhydrid unter Ringöffnung mit der aus dem Alkanolamin stammenden OH-Gruppe des Zwischenprodukts reagiert.

Als NCO-Verbindung können prinzipiell alle bekannten Isocyanate verwendet werden. Für die Auswahl dieser NCO-Verbindung ist nur entscheidend, dass diese Isocyanate nach Umsetzung mit dem Alkanolamin Produkte ergeben, die in einem gegenüber Isocyanaten inerten Lösemittel bzw. in der Schmelze löslich sind und somit der sich anschließenden Reaktion mit dem cyclischen Carbonsäureanhydrid zugänglich sind.

Im Hinblick auf eine einfachere Synthese ist es vorteilhaft, dass die NCO-Verbindung keine OH-Gruppe aufweist.

Die NCO-Verbindung wird in einem zweiten Verfahrensschritt durch Umsetzung mit mindestens einem Alkanolamin in eine funktionalisierte Polyurethan/Harnstoff-Verbindung überführt. Hinsichtlich dieser ersten Umsetzung zum Zwischenprodukt ist anzumerken, dass die Bezeichnung "sämtliches Alkanolamin" in der Weise zu verstehen ist, dass das Alkanolamin derart umgesetzt wird, so dass in der die Zwischenprodukte enthaltende Reaktionsmischung ein Gehalt an freiem Alkanolamin von weniger als 0,5 Gew.-% vorhanden ist, bezogen auf den Festkörpergehalt des Harzes.

Die Umsetzung der Ausgangskomponenten erfolgt dabei nach den gut bekannten Verfahren der organischen Chemie (vgl. z.B. Kunststoff-Handbuch, Band 7: Polyurethane, herausgegeben von Dr. Y. Oertel, Carl Hanser Verlag, München, Wien 1983).

Gegebenenfalls wird die Umsetzung in Gegenwart von mit Wasser mischbaren und leicht flüchtigen Lösemitteln durchgeführt, die gegenüber Isocyanaten inert sind. Bevorzugt wird Methylethylketon und/oder Aceton verwendet.

Um die Dispergierbarkeit in einem wässrigen Medium zu erreichen, werden an die aus dem Alkanolamin stammenden Hydroxylgruppen mindestens ein cyclisches Carbonsäureanhydrid ringöffnend addiert. Die Menge an cyclischem Carbonsäureanhydrid sollte so gewählt werden, dass die resultierende Säurezahl zwischen 10 und 50, vorzugsweise zwischen 20 und 30, liegt.

Die Überführung des so erhaltenen Polyurethans in eine wässrige Dispersion erfolgt durch Neutralisation der Carboxylgruppen durch Amine und/oder Aminoalkohole. Beispiele geeigneter Verbindungen sind Ammoniak, tertiäre Amine, wie Trimethylamin, Triethylamin und/oder Aminoalkohole wie Dimethylethanolamin, Diethylethanolamin, Methyldiethanolamin oder Triethanolamin. Die Neutralisation kann in organischer Phase oder in wässriger Phase erfolgen. Bevorzugt wird als Neutralisationsmittel Dimethylethanolamin eingesetzt.

Das so hergestellte wasserverdünnbare Polyurethan zeichnet sich dadurch aus, dass es in wasserverdünnbaren Füllerzusammensetzungen bei einer Mehrschichtlackierung in der Automobilindustrie verwendet werden kann, die eine Festkörperkonzentration von mehr als 50 % aufweisen. Unter Verwendung herkömmlicher Vernetzer resultieren aus den das erfindungsgemäße Polyurethan enthaltenden Füllerzusammensetzungen bereits bei einer Einbrenntemperatur von 140 °C Schichten, die sowohl die von der Automobilindustrie geforderte Steinschlagbeständigkeit als auch eine ausgezeichnete Überbrennstabilität aufweisen.

Wie die Beispiele verdeutlichten, zeigen die resultierende Mehrschichtlackierungen neben diesen herausragenden Merkmalen gleichzeitig im Hinblick auf die Applikationssicherheit und Vergilbungsbeständigkeit der Füllerschicht sowie den Decklackstand des Gesamtaufbaus keine verschlechterten Eigenschaften, verglichen mit einer herkömmlichen Mehrschichtlackierung des Standes der Technik.

Um die Wasserdispergierbarkeit zu unterstützen, kann es von Vorteil sein, diese NCO-Verbindung vor der Umsetzung mit nichtionischen, stabilisierenden Gruppen zu modifizieren. Hierfür besonders bevorzugt sind Alkoxypoly(oxyalkylen)alkohole. Besonders geeignete Alkoxypoly-(oxyalkylen)alkohole sind ausgewählt aus der Gruppe monoalkylierter Polyethylenoxide, wie sie unter der Handelsbezeichnung PLURIOL^{®} A der Fa. BASF vertrieben werden.

Gemäß einer bevorzugten Ausführungsform der vorliegenden Erfindung wird als NCO-Verbindung ein Präpolymer verwendet, das erhältlich ist aus der Umsetzung mindestens eines Polyols mit mindestens einem Polyisocyanat zu einem isocyanatgruppenhaltigen Polyurethanpräpolymer. Beispiele geeigneter Polyole sind gesättigte oder olefinisch ungesättigte Polyesterpolyole und/oder Polyetherpolyole mit einem zahlenmittleren Molekulargewicht von 100 bis 5.000, vorzugsweise 500 bis 2.000. Es können auch kleine Mengen eines carboxyfunktionellen Polyols verwendet werden.

Durch die Wahl geeigneter Ausgangsverbindungen für dieses Präpolymer können die physikalisch technischen Eigenschaften der resultierenden Mehrschichtlackierung entsprechend eingestellt werden.

Die NCO-Verbindung kann vorzugsweise zwei freie NCO-Gruppen aufweisen. Hierdurch wird eine engere Molmassenverteilung erreicht, verglichen mit polyfunktionellen Verbindungen.

Als Alkanolamin können alle geeigneten Verbindungen verwendet werden. Zu beachten ist, das die erfindungsgemäß verwendeten Alkanolamine ein an das Stickstoffatom gebundenes Wasserstoffatom aufweisen. Hierunter zählen beispielsweise 1-Amino-3-propanol, 1-Amino-2-propanol (Isopropanolamin), 1-Amino-4-butanol, 1-Amino-5-pentanol, 1,1'-Iminodi-2-propanol (Diisopropanolamin) und/oder 2-(2-Aminoethoxy)-ethanol.

Nicht zu verwenden im Sinne der vorliegenden Erfindung sind tertiäre Alkanolamine.

Vorzugsweise werden solche Alkanolamine eingesetzt, bei denen mindestens eine OH-Gruppe des Alkanolamins mit dem Stickstoffatom über eine substituierte oder nicht substituierte Alkylgruppe mit 2 bis 6 Kohlenstoffatomen in der Hauptkette verbunden sind.

Als Beispiele sind Aminobutanol, 1-Amino-5-pentanol, Aminohexanol, 2-(2-Aminoethoxy)-ethanol, Isopropanolamin, Diisopropanolamin, 2-Amino-2-methyl-1-propanol und 2-Amino-2-methyl-1,3-propandiol zu nennen.

Insbesondere können die aus dem Alkanolamin stammenden OH-Gruppen ganz oder teilweise sekundär sein. Beispiele für solche Verbindungen sind Isopropanolamin und Diisopropanolamin. Auch andere Alkanolamine mit primären OH-Gruppen können verwendet werden, wie z.B. N-(2-Aminoethyl)ethanolamin und/oder Butylethanolamin.

Besonders bevorzugt für die Herstellung des erfindungsgemäßen Polyurethans werden als Alkanolamin Diethanolamin und/oder Diisopropanolamin verwendet.

Im Hinblick auf eine ausreichende Wasserdispergierbarkeit sollte das Polyurethan der vorliegenden Erfindung eine Säurezahl von mindesten 10 mg KOH/g, insbesondere von mindestens 20 mg KOH/g, aufweisen.

Das zahlenmittlere Molekulargewicht des erfindungsgemäßen Polyurethans liegt bevorzugterweise zwischen 500 und 10.000, insbesondere zwischen 1.000 und 4.000.

Das cyclische Carbonsäureanhydrid kann ausgewählt sein aus der Gruppe von Phtalsäureanhydrid, Hexahydrophthalsäureanhydrid, Tetrahydophthalsäureanhydrid, Mehylhexahydrophthalsäureanhydrid, Bernsteinsäureanhydrid und Maleinsäureanhydrid.

Besonders bevorzugt wird als cyclisches Carbonsäureanhydrid Trimellithsäureanhydrid verwendet.

Gemäß einem weiteren, ebenfalls beanspruchten Gegenstand der vorliegenden Erfindung wird das zuvor beschriebene wasserverdünnbare Polyurethan in Kombination mit einem Melaminharz zur Herstellung wärmehärtbarer Beschichtungszusammensetzungen verwendet. Hierzu können prinzipiell alle geeigneten Vernetzer verwendet werden.

Besonders bevorzugt sind hochalkylierte Melaminharze, die mit dem erfindungsgemäßen Polyurethan kompatibel sind. Hierfür besonders bevorzugt sind Melaminharze ohne NH-Gruppen, insbesondere Hexamethoxymethylmelamin (HMMA).

Solche Beschichtungszusammensetzungen können bei einer Temperatur von mehr als 180 °C vernetzt werden, was eine ausreichende Überbrennstabilität im Sinne der vorliegenden Anmeldung verdeutlicht.

Sofern für die Anwendung einer das erfindungsgemäße Polyurethan enthaltende Beschichtungszusammensetzung keine Überbrennstabilität gefordert ist, können auch hochreaktive Melaminharze verwendet werden, um die Einbrenntemperatur unter 140 °C zu senken. Solche hochreaktiven Melaminharze werden beispielsweise von der Fa. BASF unter der Bezeichnung LUWIPAL^{®} 062 vertrieben.

Die zuvor beschriebenen, wasserverdünnbaren Polyurethane werden insbesondere zur Herstellung von Beschichtungszusammensetzungen in der Automobilindustrie verwendet, besonders bevorzugt von Füllerzusammensetzungen.

Die Auftragung der Füllerschichten erfolgt im allgemeinen durch Spritzlackierverfahren, z. B. durch Druckluft-, Heiß- oder Airless-Spritzen, oder durch elektrostatische Lackierverfahren, z.B. mittels schnellrotierender Glocken (Minibells), durch elektrostatische Automatik- oder Handspritzpistolen mit Luftunterstützung oder durch Walzen, z. B. im Bandlackierverfahren.

Die folgenden Beispiele dienen der Erläuterung der Erfindung, ohne diese darauf zu beschränken:

### Beispiel 1:

### Herstellung eines erfindungsgemäßen Polyurethans:

### Herstellung eines Polyesterdiols (A):

In einem Glaskolben mit einem Volumen von 4 l, ausgestattet mit einem Rührer, einer Füllkörperkolonne und einem Rückflußkühler sowie einer Temperaturmessung für das Reaktionsgemisch und den Kolonnenkopf wurden die folgenden Ausgangsprodukte eingewogen: 1730 g Hexandiol-1,6 und 1622 g Isophthalsäure. Die Reaktionsmischung wurde bei einer Temperatur von 120°C aufgeschmolzen und anschließend unter Rühren die Reaktionstemperatur innerhalb von vier Stunden auf 230°C erhöht. Der Temperaturanstieg wurde durch Messung der Kopftemperatur der Füllkörperkolonne geregelt. Die Kopftemperatur war dabei auf maximal 99°C begrenzt. Die Schmelze ist 12 Stunden bei einer Temperatur von 230°C kondensiert worden, bis die Säurezahl auf einen Wert von 2 mg _{KOH}/g_{Festharz} gefallen war. Anschließend ist das Reaktionsprodukt bei einer Temperatur von 180°C eine Stunde unter Vakuum gehalten worden.

Das zahlenmittlere Molgewicht beträgt rechnerisch 614 g/mol.

### Herstellung der Polyurethandispersion:

In einem Glaskolben mit einem Volumen von 4 1, ausgestattet mit einem Rührer, einem Rückflußkühler sowie einer Temperaturmessung wurden 850,0 g des Polyesterdiols (A) sowie 409,8 g Isophorondiisocyanat, 839,8 g Methylethylketon und 2,0 g Dibutylzinn-dilaurat vorgelegt und unter Rühren auf 80 °C erhitzt und die Reaktion so lange weiter geführt bis der NCO-Gehalt einen konstanten Wert erreicht hat. Anschließend wird die Harzlösung auf 40°C abgekühlt und 96,9 g Diethanolamin zugegeben. Das molare Verhältnis Isocyanat zu Diethanolamin betrug für dieses Beispiel 1: 1. Nach Abklingen der exothermen Reaktion ist die Temperatur innerhalb einer halben Stunde auf 80°C erhöht worden. Eine halbe Stunde nach Erreichen der Temperatur wurden 57,6 g Trimellithsäureanhydrid zugesetzt. Nach einer Reaktionszeit von einer Stunde sind 53,4 g Dimethylethanolamin und 2766.4 g deionisiertes Wasser zudosiert worden, wobei die Temperatur nicht unter 60°C absank. Nach Entfernen des Methylethylketons im Vakuum wurde eine stabile, opake Dispersion mit einer Festkörperkonzentration von 43% erhalten.

### Beispiel 2:

### Herstellung eines erfindungsgemäßen Polyurethans:

### Herstellung eines Polyesterdiols (B):

In einem Glaskolben mit einem Volumen von 4 l, ausgestattet mit einem Rührer, einem Wasserabscheider und einem Rückflußkühler sowie einer Temperaturmessung für das Reaktionsgemisch wurden die folgenden Ausgangsprodukte eingewogen: 1918,8 g 2,2-Bis-[p-(β-hydroxytriethoxy)-phenyl]-propan, 431,6 g Isophthalsäure und 200 g Xylol. Die Reaktionsmischung wurde unter Rühren innerhalb von zwei Stunden auf eine Reaktionstemperatur von 180°C erhöht. Sie wurde stündlich um 10°C bis auf 210°C erhöht. Die Schmelze wurde dann 12 Stunden lang bei einer Temperatur von 230°C kondensiert, bis die Säurezahl auf einen Wert von 2 mg KOH/g gefallen war. Anschließend wurde das Reaktionsprodukt bei einer Temperatur von 180 °C eine Stunde lang unter Vakuum gehalten. Das zahlenmittlere Molgewicht beträgt rechnerisch 1736 g/mol.

### Herstellung der Polyurethandispersion:

In einem Glaskolben mit einem Volumen von 4 1, ausgestattet mit einem Rührer, einem Rückflußkühler sowie einer Temperaturmessung wurden 1041,6 g des Polyesterdiols (B) sowie 266,4 g Isophorondiisocyanat, 872 g Methylethylketon und 2,0 g Dibutylzinndilaurat vorgelegt und unter Rühren auf 80 °C erhitzt und die Reaktion so lange weiter geführt bis der NCO-Gehalt einen konstanten Wert erreicht hat. Anschließend wurde die Harzlösung auf 40°C abgekühlt und 94,4 g Diethanolamin zugegeben. Das molare Verhältnis Isocyanat zu Diethanolamin betrug für dieses Beispiel 1 zu 0,75. Nach Abklingen der exothermen Reaktion wurde die Temperatur innerhalb einer halben Stunde auf 80°C erhöht worden. Eine halbe Stunde nach Erreichen der Temperatur wurden 57,6 g Trimellithsäureanhydrid zugesetzt. Nach einer Reaktionszeit von einer Stunde wurden 53,4 g Dimethylethanolamin und 1858,2 g deionisiertes Wasser zudosiert, wobei die Temperatur nicht unter 60°C absank. Nach Entfernen des Methylethylketons im Vakuum wurde eine stabile, opake Dispersion mit einer Festkörperkonzentration von 45 % erhalten.

### Beispiel 3.1: Herstellung einer Pigmentpaste:

In einem Rührgefäß aus Edelstahl wurden die nachfolgenden Komponenten in der genannten Reihenfolge eingewogen und nach jeder Zugabe durch Rühren homogenisiert: 443,6 g der Polyurethandispersion aus Beispiel 1, 7,7 g Surfynol 104E (Netz- und Dispergieradditiv), 15,7 g Additol XL 250, 13,0 g Drewplus, 7,7 g Aerosil R 972 (Degussa), 433 g Bariumsulfat (Blanc Fixe® micro), 49,5 g Titandioxid (Tiona RCL 628), 23,5 g Printex G, 26 g Talkum IT extra, sowie 66,7 g deionisiertes Wasser. Die Mischung wurde während dreißig Minuten in einem Dissolver vordispergiert und anschließend auf einer Sandmühle auf eine Korn-Feinheit <10 µm gemahlen. Die Temperatur wurde während des Mahlvorgangs unter 40 °C gehalten.

### Beispiel 3.2: Herstellung einer Pigmentpaste:

In einem Rührgefäß aus Edelstahl wurden die nachfolgenden Bestandteile in der genannten Reihenfolge eingewogen und nach jeder Zugabe durch Rühren homogenisiert: 423,8 g der Polyurethandispersion aus Beispiel 2, 7,7 g Surfynol 104E (Netz- und Dispergieradditiv), 15,7 g Additol XL 250, 13,0 g Drewplus, 7,7 g Aerosil R 972 (Degussa), 433 g Bariumsulfat (Blanc Fixe® micro), 49,5 g Titandioxid (Tiona RCL 628), 23,5 g Printex G, 26 g Talkum IT extra, sowie 86,5 g deionisiertes Wasser. Die Mischung wurde während dreißig Minuten in einem Dissolver vordispergiert und anschließend auf einer Sandmühle auf eine Korn-Feinheit < 10 µm gemahlen. Die Temperatur wurde während des Mahlvorgangs unter 40 °C gehalten.

### Beispiel 4.1: Herstellung einer erfindungsgemäßen Füllerformulierung:

Der Füller wurde durch Vermischen von 523 g der Pigmentpaste gemäß Beispiel 3.1 und 343 g der Polyurethandispersion aus Beispiel I mit 122,4 g eines hoch alkylierten, mit Methanol veretherten, niedermolekularen Melaminharzes, 26 g N-Methypyrrolidon und 13 g eines aliphatischen Kohlenwasserstoffgemisches mit einem Siedepunkt von 180°C und 210°C, sowie 6,5 g BYK 381 (Verlaufsadditiv, BYK-Chemie) hergestellt. Die Viskosität wurde mit deionisiertem Wassers auf 120 mPas bei einer Scherrate von 1000 s⁻¹ mit einem Rotationsviskosimeter eingestellt. Die Festkörperkonzentration betrug 55 %.

### Beispiel 4.2: Herstellung einer erfindungsgemäßen Füllerformulierung:

Der Füller wurde durch Vermischen von 523 g der Pigmentpaste gemäß Beispiel 3.2 und 304,9 g der Polyurethandispersion aus Beispiel 2 mit 122,4 g eines hoch alkylierten, mit Methanol veretherten, niedermolekularen Melaminharzes, 26 g N-Methypyrrolidon und 13 g eines aliphatischen Kohlenwasserstoffgemisches mit einem Siedepunkt von 180 °C und 210 °C, sowie 6,5 g BYK 381 (Verlaufsadditiv, BYK-Chemie) hergestellt. Die Viskosität wurde mit deionisiertem Wassers auf 125 mPas bei einer Scherrate von 1000 s⁻¹ mit einem Rotationsviskosimeter eingestellt. Die Festkörperkonzentration betrug 54 %.

### Beispiel 4.3: Herstellung einer nicht erfindungsgemäßen Füllerformulierung:

Die Herstellung erfolgte analog Beispiel 4.2, wobei anstelle der Polyurethandispersion aus Beispiel 2 die handelsübliche Polyurethandispersion Resydrol VAZ 6600 der Fa. Solutia sowohl für die Füllerzusammensetzung als auch für die Herstellung der Pigmentpaste verwendet wurde. Die erhaltene Festkörperkonzentration betrug 48 % bei einer Viskosität von 125 mPas ( Scherrate von 1000 s⁻¹).

### Applikation des Füllers:

Für die Herstellung der Mehrschichtlackierung wurden übliche und bekannte Prüftafeln aus Stahl verwendet, die mit einer 20 µm dicken Elektrotauchlackierung, hergestellt aus einem handelsüblichen kationischen Elektrotauchlack, beschichtet waren.

Die Prüftafeln wurden mit den Füllern gemäß Beispiel 4.1, 4.2 bzw. 4.3 pneumatisch beschichtet. Die resultierenden Füllerschichten wurden während acht Minuten bei 80°C vorgetrocknet und anschließend bei 140°C; 160°C und 190°C während 20 min eingebrannt. Es wurde eine Füllerschicht mit einer Schichtdicke von 35 ± 2 µm erhalten.

Auf die Füllerschicht wurde ein handelsüblicher konventioneller Unidecklack pneumatisch appliziert und nach einer zehnminütigen Ablüftung bei Raumtemperatur und während 30 min bei 140°C eingebrannt. Die Unidecklackierung der resultierenden Mehrschichtlackierung hatte eine Schichtdicke von 30 µm.

Die in dieser Weise hergestellten Mehrschichtlackierungen wurden entsprechend den nachfolgend beschriebenen Test untersucht. Die Ergebnisse der Untersuchungen sind in den folgenden Tabellen zusammengefasst:
Dabei sind in Tabelle 1 die mechanischen Eigenschaften wiedergegeben, während Tabelle 11 die Auswirkungen von Überbrennbedingungen darstellt.

### Bestimmung der Festkörperkonzentration:

Die Festkörperbestimmung wurde im Umluftofen durch Einbrennen bei einer Temperatur von 120 °C durchgeführt. Dazu wurden 1 g der zu prüfenden Substanz auf Patentdeckel ( Durchmesser 75 mm), gleichmäßig über die Oberfläche verteilt, aufgetragen und eine Stunde im Ofen getrocknet. Der nichtflüchtige Anteil wurde anschließend durch Zurückwiegen der Deckel bestimmt. Es ist eine Dreifachbestimmung durchgeführt worden.

### Bestimmung der Schichtdicke:

Die Bestimmung der Schichtdicke erfolgte unter Verwendung des Geräts Surfix der Fa. Phynix.

### Bestimmung des Glanzgrades

Die Bestimmung des Glanzgrades erfolgte unter Verwendung des Geräts *haze-gloss* der Fa. BYK Gardner unter einem Winkel von 20° bzw. 60°.

### Prüfung auf Steinschlagbeständigkeit (Multischlagtest):

Die Prüfung der Steinschlagbeständigkeit erfolgte unter Verwendung eines Steinschlagprüfgerätes nach VDA, Modell 508 der Fa. Erichsen GmbH + Co KG.

Die Prüfbleche wurden bei einem Druck von 2 bar 2 mal mit jeweils 500 g abgeschrecktem Eisenschrot "Diamant", eckig, Größe 4-5 mm beschossen.

### Prüfung auf Steinschlagbeständigkeit nach BMW (Monoschlagtest):

Die Bestimmung erfolgt gemäß der Prüfanweisung BMW PA 15063-L vom April 1997. Dabei wird ein konischer Prüfkörper gemäß VDA-Prüfblatt-Entwurf 621-428 mit einem Druck von 2 bar auf die fertige Mehrschichtlackierung geschossen. Es wird die Abplatzung und die Bruchstelle im Aufbau bestimmt.

### Bestimmung der Pendelhärte nach König

Die Pendelhärte wurde mit einem *pendulum hardness* tester der Fa. BYK-Gardner bestimmt.

**Tabelle I**

| | Beispiel 4.2 Vergleichsbeispiel erfindungsgemäß | Beispiel 4.3 Vergleichsbeispiel nicht erfindungsgemäß |
|---|---|---|
| Festkörperkonzentration | 54% | 48% |
| Decklackstand ^{a)} | 2 | 2 |
| Glanz (20° / 60°) | 78 / 89 | 70 / 90 |
| König Härte (Sek.) für 160°C | 142 | 149 |
| Steinschlagbeständigkeit (VDA) | 2 | 4 |
| BMW Meißel (Abplatzung in mm/Trennebene) | I/kohäsiv | 3/adhäsiv |

**Tabelle II**

| | Beispiel 4.1 Vergleichsbeispiel erfindungsgemäß | Beispiel 4.3 Vergleichsbeispiel nicht erfindungsgemäß |
|---|---|---|
| Festkörperkonzentration | 55% | 48% |
| Decklackstand ^{a)} | 2 | 2 |
| Glanz (20° / 60°) | 69 / 89 | 70 / 90 |
| König Härte (140 / 160 / 190°C) Sek. | 124 / 137 / 145 | 84/ 148/ 154 |
| Steinschlagbeständigkeit VDA (140°C / 160°C / 190° C) | 2,5 / 2,0 / 2,5 | 2,5 / 4,0 / 4,5 |

| | | |
|---|---|---|
| ^{a)} visuelle Beurteilung | | |

Aus den in der Tabelle I aufgeführten Werten wird deutlich, dass der unter Verwendung des erfindungsgemäßen Vernetzers hergestellte Füller in bezug auf die Festkörperkonzentration der applikationsfertigen Füllerformulierung, der Steinschlagbeständigkeit und den Decklackstand der fertigen Mehrschichtlackierung verbesserte Eigenschaften aufweisen, verglichen mit den Füllern des Standes der Technik.

Tabelle II verdeutlicht, dass diese Überlegenheit auch unter Überbrennbedingungen gewährleistet ist.

## Patentansprüche

1. Wasserverdünnbares Polyurethan mit mindestens zwei freien OH-Gruppen, erhältlich aus einer ersten Umsetzung eines primären und/oder sekundären Alkanolamins mit einer NCO-Verbindung zu einem Zwischenprodukt, gefolgt von einer Addition eines cyclischen Carbonsäureanhydrids an das Zwischenprodukt; wobei
• die NCO-Verbindung mindestens eine freie NCO-Gruppe und keine blockierte NCO-Gruppe aufweist;
• bei der ersten Umsetzung zum Zwischenprodukt sämtliches Alkanolamin derart umgesetzt wird, dass das Stickstoffatom des Alkanolamins mit einer der freien NCO-Gruppen des Präpolymers unter Bildung einer Harnstoffbindung reagiert; und
• das cyclische Carbonsäureanhydrid unter Ringöffnung mit der aus dem Alkanolamin stammenden OH-Gruppe des Zwischenprodukts reagiert.

2. Wasserverdünnbares Polyurethan nach Anspruch I, **dadurch gekennzeichnet, dass** die NCO-Verbindung keine OH-Gruppe aufweist.

3. Wasserverdünnbares Polyurethan nach Anspruch I oder 2, **dadurch gekennzeichnet, dass** die NCO-Verbindung durch mindestens ein Alkoxypoly(oxyalkylen)alkohol modifiziert ist

4. Wasserverdünnbares Polyurethan nach einem der vorhergehenden Ansprüche, dass die NCO-Verbindung ein Präpolymer ist.

5. Wasserverdünnbares Polyurethan nach einem der vorhergehenden Ansprüche, **dadurch gekennzeichnet, dass** die NCO-Verbindung mindestens zwei freie NCO-Gruppen aufweist.

6. Wasserverdünnbares Polyurethan nach einem der vorhergehenden Ansprüche, **dadurch gekennzeichnet, dass** mindestens eine OH-Gruppe des Alkanolamins mit dessen Stickstoffatom über eine substituierte oder nicht substituierte Alkylgruppe mit 2 bis 6 Kohlenstoffatomen in der Hauptkette verbunden ist.

7. Wasserverdünnbares Polyurethan nach einem der vorgehenden Ansprüche, **dadurch gekennzeichnet, dass** die aus dem Alkanolamin stammenden OH-Gruppen ganz oder teilweise sekundär sind.

8. Wasserverdünnbares Polyurethan nach einem der vorhergehenden Ansprüche, **dadurch gekennzeichnet, dass** das Alkanolamin Diethanolamin und/oder Diisopropanolamin ist.

9. Wasserverdünnbares Polyurethan nach einem der vorhergehenden Ansprüche, **dadurch gekennzeichnet, dass** es eine Säurezahl von mindesten 10 mg KOH/g, insbesondere von mindestens 20 mg KOH/g, aufweist.

10. Wasserverdünnbares Polyurethan nach einem der vorgehenden Ansprüche, **dadurch gekennzeichnet, dass** das Polyurethan ein zahlenmittleres Molekulargewicht zwischen 500 und 10.000, insbesondere zwischen 1.000 und 4.000, aufweist.

11. Wasserverdünnbares Polyurethan nach einem der vorhergehenden Ansprüche, **dadurch gekennzeichnet, dass** das cyclische Carbonsäureanhydrid ausgewählt ist aus der Gruppe von Phtalsäureanhydrid, Hexahydrophthalsäureanhydrid, Tetrahydophthalsäureanhydrid, Methylhexahydrophthalsäureanhydrid, Bernsteinsäureanhydrid und Maleinsäureanhydrid.

12. Wasserverdünnbares Polyurethan nach einem der Ansprüche 1 bis 10, **dadurch gekennzeichnet, dass** das cyclische Carbonsäureanhydrid Trimellithsäureanhydrid ist.

13. Verwendung eines wasserverdünnbaren Polyurethans nach einem der vorhergehenden Ansprüche in Kombination mit einem Melaminharz zur Herstellung wärmehärtbarer Beschichtungszusammensetzungen.

14. Verwendung eines wasserverdünnbaren Polyurethans nach Anspruch 13, **dadurch gekennzeichnet, dass** das Melaminharz ein hochalkyliertes Melaminharz ist.

15. Verwendung nach Anspruch 14, **dadurch gekennzeichnet, dass** das Melaminharz ein solches ohne NH-Gruppen ist, insbesondere Hexamethoxymethylmelamin (HMMA).

16. Verwendung nach einem der Ansprüche 13 bis 15, **dadurch gekennzeichnet, dass** die Vernetzungstemperatur weniger als 145 °C beträgt.

17. Verwendung nach einem der Ansprüche 13 bis 16, **dadurch gekennzeichnet, dass** die Vernetzungstemperatur mehr als 180 °C beträgt.

18. Verwendung eines wasserverdünnbaren Polyurethans nach einem der vorhergehenden Ansprüche zur Herstellung von Beschichtungszusammensetzungen, insbesondere von Füllern in der Automobilindustrie.

## Claims

1. A water-thinnable polyurethane with at least two free OH groups obtainable from a first reaction of a primary and/or secondary alkanolamine with an NCO compound giving an intermediate product, followed by the addition of a cyclic carboxylic acid anhydride to the intermediate product; with
• the NCO compound comprising at least one free NCO group and no blocked NCO group;
• all alkanolamine being converted during the first reaction to the intermediate product such that the nitrogen atom of the alkanolamine reacts with one of the free NCO groups of the prepolymer to form a urea bond; and
• the cyclic carboxylic acid anhydride reacting under ring opening of the intermediate product which OH-group originates from the alkanolamine.

2. The water-thinnable polyurethane according to claim 1, **characterized in that** the NCO compound does not comprise any OH group.

3. The water-thinnable polyurethane according to claim 1 or 2, **characterized in that** the NCO compound is modified by at least one alkoxypoly(oxyalkylene) alcohol.

4. The water-thinnable polyurethane according to any of the preceding claims, **characterized in that** the NCO compound is a prepolymer.

5. The water-thinnable polyurethane according to any of the preceding claims, **characterized in that** the NCO compound comprises at least two free NCO groups.

6. The water-thinnable polyurethane according to any of the preceding claims, **characterized in that** at least one OH group of the alkanolamine is linked with its nitrogen atom via a substituted or unsubstituted alkyl group having 2 to 6 carbon atoms in the main chain.

7. The water-thinnable polyurethane according to any of the preceding claims, **characterized in that** OH groups originating from the alkanolamine are fully or partially secondary.

8. The water-thinnable polyurethane according to any of the preceding claims, **characterized in that** alkanolamine is diethanolamine and/or diisopropanolamine.

9. The water-thinnable polyurethane according to any of the preceding claims, **characterized in that** it has an acid number of at least 10 mg KOH/g, in particular of at least 20 mg KOH/g.

10. The water-thinnable polyurethane according to any of the preceding claims, **characterized in that** the polyurethane has a number average molecular weight of between 500 and 10,000, in particular between 1,000 and 4,000.

11. The water-thinnable polyurethane according to any of the preceding claims, **characterized in that** the cyclic carboxylic acid anhydride is selected from the group of phthalic acid anhydride, hexahydrophthalic acid anhydride, tetrahydrophthalic acid anhydride, methyl hexahydrophthalic acid anhydride, succinic acid anhydride and maleic acid anhydride.

12. The water-thinnable polyurethane according to any of claims 1 to 10, **characterized in that** the cyclic carboxylic acid anhydride is trimellithic acid anhydride.

13. Use of a water-thinnable polyurethane according to any of the preceding claims in combination with a melamine resin for the production of thermosetting coating compositions.

14. Use of a water-thinnable polyurethane according to claim 13, **characterized in that** the melamine resin is a highly alkylated melamine resin.

15. Use according to claim 14, **characterized in that** the melamine resin is one without NH groups, in particular hexamethoxymethyl melamine (HMMA).

16. Use according to any of claims 13 to 15, **characterized in that** the crosslinking temperature is less than 145°C.

17. Use according to any of claims 13 to 16, **characterized in that** the crosslinking temperature is more than 180°C.

18. Use of a water-thinnable polyurethane according to any of the preceding claims for the production of coating compositions, in particular of fillers in the automotive industry.

## Revendications

1. Polyuréthane diluable à l'eau comportant au moins deux groupes OH libres, pouvant être obtenu par une première conversion d'une alcanolamine primaire et/ou secondaire avec un composé NCO en un produit intermédiaire, suivie de l'addition d'un anhydride d'acide carboxylique cyclique dans le produit intermédiaire ;
le composé NCO présentant au moins un groupe NCO libre et un groupe NCO bloqué ;
lors de la première conversion pour obtenir le produit intermédiaire, l'ensemble de l'alcanolamine étant convertie de telle sorte que l'atome d'azote de l'alcanolamine réagisse avec l'un des groupes NCO libres du prépolymère en formant un composé d'urée ; et
l'anhydride d'acide carboxylique cyclique réagissant par une ouverture de cycle avec le groupe OH du produit intermédiaire, provenant de l'alcanolamine.

2. Polyuréthane diluable à l'eau selon la revendication 1, **caractérisé en ce que** le composé NCO ne présente pas de groupe OH.

3. Polyuréthane diluable à l'eau selon la revendication 1 ou 2, **caractérisé en ce que** le composé NCO est modifié par au moins un alcool alcoxypoly (oxyalkylène).

4. Polyuréthane diluable à l'eau selon l'une quelconque des revendications précédentes, **caractérisé en ce que** le composé NCO est un prépolymère.

5. Polyuréthane diluable à l'eau selon l'une quelconque des revendications précédentes, **caractérisé en ce que** le composé NCO présente au moins deux groupes NCO libres.

6. Polyuréthane diluable à l'eau selon l'une quelconque des revendications précédentes, **caractérisé en ce qu'**au moins un groupe OH de l'alcanolamine est lié avec son atome d'azote par un groupe alkyle substitué ou non substitué par 2 à 6 atomes de carbone dans la chaîne principale.

7. Polyuréthane diluable à l'eau selon l'une quelconque des revendications précédentes, **caractérisé en ce que** les groupes OH provenant de l'alcanolamine sont totalement ou partiellement secondaires.

8. Polyuréthane diluable à l'eau selon l'une quelconque des revendications précédentes, **caractérisé en ce que** l'alcanolamine est la diéthanolamine et/ou la diisopropanolamine.

9. Polyuréthane diluable à l'eau selon l'une quelconque des revendications précédentes, **caractérisé en ce qu'**il présente un indice d'acidité d'au moins 10 mg KOH/g, en particulier d'au moins 20 mg KOH/g.

10. Polyuréthane diluable à l'eau selon l'une quelconque des revendications précédentes, **caractérisé en ce que** le polyuréthane présente un poids moléculaire moyen en nombre entre 500 et 10 000, en particulier entre 1 000 et 4 000.

11. Polyuréthane diluable à l'eau selon l'une quelconque des revendications précédentes, **caractérisé en ce que** l'anhydride d'acide carboxylique cyclique est choisi dans le groupe comprenant l'anhydride d'acide phtalique, l'anhydride d'acide hexahydrophtalique, l'anhydride d'acide tétrahydrophtalique, l'anhydride d'acide méthylhexahydrophtalique, l'anhydride d'acide succinique et l'anhydride d'acide maléique.

12. Polyuréthane diluable à l'eau selon l'une quelconque des revendications 1 à 10, **caractérisé en ce que** l'anhydride d'acide carboxylique cyclique est l'anhydride d'acide trimellitique.

13. Utilisation d'un polyuréthane diluable à l'eau selon l'une quelconque des revendications précédentes, en combinaison avec une résine mélamine pour produire des compositions de revêtement thermodurcissables.

14. Utilisation d'un polyuréthane diluable à l'eau selon la revendication 13, **caractérisé en ce que** la résine mélamine est une résine mélamine hautement alkylée.

15. Utilisation selon la revendication 14, **caractérisée en ce que** la résine mélamine est une résine sans groupe NH, en particulier l'hexaméthoxyméthylmélamine (HMMA).

16. Utilisation selon l'une quelconque des revendications 13 à 15, **caractérisée en ce que** la température de réticulation est inférieure à 145° C.

17. Utilisation selon l'une quelconque des revendications 13 à 16, **caractérisée en ce que** la température de réticulation est supérieure à 180° C.

18. Utilisation d'un polyuréthane diluable à l'eau selon l'une quelconque des revendications précédentes, pour produire des compositions de revêtements, en particulier des substances de remplissage dans l'industrie automobile.
